(19) Europäisches Patentamt
European Patent Office
Office européen des brevets

(11) Publication number: **0 109 723**
**A1**

(12) # EUROPEAN PATENT APPLICATION

(21) Application number: **83201651.3**

(22) Date of filing: **21.11.83**

(51) Int. Cl.³: **A 01 N 47/20**

(30) Priority: **22.11.82 US 443430**

(43) Date of publication of application:
**30.05.84 Bulletin 84/22**

(84) Designated Contracting States:
**AT BE CH DE FR GB IT LI NL**

(71) Applicant: **STAUFFER CHEMICAL COMPANY**
**Westport Connecticut 06880(US)**

(72) Inventor: **Baker, Don Robert**
**15 Muth Drive**
**Orinda California 94563(US)**

(72) Inventor: **Yurcak, Ellen**
**845 Sunnyoaks Avenue**
**Campbell California 95008(US)**

(74) Representative: **Urbanus, Henricus Maria, Ir. et al,**
**c/o Vereenigde Octrooibureaux Nieuwe Parklaan 107**
**NL-2587 BP 's-Gravenhage(NL)**

(54) **1-(Phenylcarbamyloxy)-2-butyne as a selective herbicide in broadleaf crops.**

(57) 1-(Phenylcarbamoyloxy)-2-butyne which has the structural formula

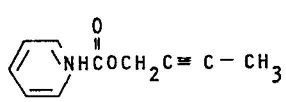

is useful as a selective herbicide in broadleaf crops.

EP 0 109 723 A1

Croydon Printing Company Ltd.

# 1-(PHENYLCARBAMYLOXY)-2-BUTYNE AS A SELECTIVE HERBICIDE IN BROADLEAF CROPS

## Background of the Invention

An herbicide is a compound which controls or modifies plant growth, e.g. killing, retarding, defoliating, desiccating, regulating, stunting, tillering, stimulating, and dwarfing. "Plants" refer to all physical parts, including seeds, seedlings, saplings, roots, tubers, stems, stalks, foliage, and fruits. "Plant growth" is meant to include all phases of development from seed germination to natural or induced cessation of life.

Herbicides are generally used to control or eradicate weed pests. They have gained a high degree of commercial success because it has been shown that such control can increase crop yield and reduce harvesting costs.

Herbicidal effectiveness is dependent upon several variables. One of these is the time or growth related method of application. In the past, the most popular methods of application included: pre-plant incorporation into the soil, pre-emergence surface treatment of seeded soil, and post-emergence treatment of the plant and soil.

The most important determinant of herbicidal effectiveness is the susceptibility of the target weed. Certain herbicidal compounds are phytotoxic to some weed species but not to others.

The manufacturer of the herbicide recommends a range of rates and concentrations calculated to maximize weed control. The range of rates varies from approximately 0.01 to 50 pounds per acre (0.0112 to 56 kilograms per hectare (k/ha)), usually from 0.1 to 25 pounds per acre (0.112 to 28 k/ha). The actual amount used depends upon several considerations, including particular weed susceptibility and overall cost limitations.

1-(phenylcarbamyloxy)-2-butyne is well known as an acaricide and for its insecticide use as described in U.S. Patent No. 3,660,465, but has hereunto not been known for selective herbicidal use in broadleaf crops for controlling both grasses and broadleaf weeds.

## Summary of the Invention

The present invention pertains to the discovery that 1-(phenylcarbamoyloxy)-2-butyne has the remarkable effect of controlling blackgrass, annual bluegrass, perennial ryegrass, wild oats, bedstraw, common chickweed, curly dock, ivyleaf speedwell, common lambsquarter, wild buckwheat, wild mustard and other weeds when applied at certain rates in a pre-emergence or post-emergent manner, while at the same rate exhibiting no adverse effect to broadleaf crops such as sugarbeets, sunflowers and oilseed rape.

The selectivity toward broadleaf crops that is possessed by the compound of this invention is quite unexpected and surprising in light of the fact that no previous herbicidal use has been noted in the prior art.

## Description of the Invention

This invention is directed to the use of 1-(phenylcarbamoyloxy)-2-butyne as a selective herbicide for use on broadleaf crops. Crops such as sugarbeets, sunflowers and oilseed rape show a high degree of tolerance to 1-(phenylcarbamoyloxy)-2-butyne.

The above herbicidal compound can be prepared by the general methods described in U.S. Patent No. 3,660,465. 1-(Phenylcarbamoyloxy)-2-butyne is a known acaricide and insecticide and its method of synthesis is well known. It is not known as a herbicide, therefore, it is quite unexpected to discover the high degree of tolerance broadleaf crops exhibit toward 1-(phenylcarbamoyloxy)-2-butyne.

It has been discovered that 1-(phenylcarbamoyloxy)-2-butyne is particularly effective in control of blackgrass, annual bluegrass, perennial ryegrass, wild oats, bedstraw, common chickweed, curly dock, ivyleaf speedwell, common lambsquarter, wild buckwheat, wild mustard and other weeds. This is particularly unexpected in that no previous herbicidal use has been noted in the prior art.

The compound of the present invention can be prepared according to the teaching of the following example.

EXAMPLE

1-(phenylcarbamoyloxy)2-butyne

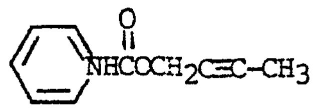

2-Butyne-1-ol, (7.6 ml, 0.10 mole), one drop dibutyl tin dilaurate, mixed in 50 ml dry ethanol with vigorous stirring in a flask. Phenyl isocyanate (10.8 ml, 0.10 mole) is added to the flask with an exothermic reaction and is heated at reflux for 1/2 hour. The reaction mixture is allowed to stand for 2 hours. Crystals formed and were filtered off to yield the product, m.p. 64-66°C. The yield is 15.2 grams. Analysis of the product is in agreement with the structure of the title compound.

Pre-Emergence and Post-emergence Screening Tests

Compound I was evaluated in greenhouse tests for pre- and post-emergence herbicidal activity and crop selectivity. Five separate tests were conducted using rates of application of 0.25, 0.50, 1.0, 2.0 and 4.0 pounds active ingredient per acre. Four grassy weed species were used in all tests, and are listed below. Seven broadleaf weed species were used among the five tests; the broadleaf weed species varied from test to test due to the availability of germinative seed. These species are also listed below.

Grasses:

| | |
|---|---|
| blackgrass | [*Alopecurus myosuroides* (Huds.)] |
| annual bluegrass | [*Poa annua* (L.)] |
| perennial ryegrass | [*Lolium perenne* (L.)] |
| wild oats | [*Avena fatua* (L.)] |

Broadleaf:

| | |
|---|---|
| bedstraw | [*Galium aparine* (L.)] |
| common chickweed | [*Stellaria media* (Cyrillo)] |
| curly dock | [*Rumex crispus* (L.)] |

| | |
|---|---|
| ivyleaf speedwell | [Veronica hederaefolia (L.)] |
| common lambsquarter | [Chenopodium album (L.)] |
| wild buckwheat | [Polygonum convolvulus (L.)] |
| wild mustard | [Brassica kaber (DC.)] |

Five crops were included in one or more of the tests and were as follows:

| | |
|---|---|
| sugarbeets | [Beta vulgaris (L.)] |
| sunflower | [Helianthus annus (L.)] |
| oilseed rape | [Brassica napus (L.)] |
| winter barley | [Hordeum vulgare (L.)] |
| winter wheat | [Triticum aestivum (L.)] |

Seed was sown into flats containing a loamy sand soil amended with fertilizer and a fungicide. Flats for pre-emergence surface applications were sprayed immediately after sowing within one day. Flats for post-emergence applications were put into a greenhouse and kept moist by routine hand watering. When seedlings were in a one or two true-leaf stage, post-emergence application was made.

Compound I was weighed on a Sartorius 1265 MP scale (90 mg = one pound per acre) into a 60 ml bottle. The chemical was then put into solution by addition of 30 ml of acetone which was previously amended with 0.1% of polyoxyethylene sorbitan monolaurate. The solution was then diluted with 30 ml of water.

Flats were sprayed with the chemical solution by use of a linear spray table calibrated to deliver a spray volume of 80 gallons per acre. Flats were immediately moved to a greenhouse. Pre-emergence flats were watered by hand from overhead. The soil in post-emergence flats was kept moist by routine hand watering. Foliage was not dosed with water in order to prevent the loss of the chemical. Maximum and minimum air temperatures in the greenhouse for an average of 20 days test period were 72°F (25°C) and 60°F (15°C), respectively. Light intensity was reduced by applying a double layer of commercial glasshouse coating to the entire glasshouse.

Weed control and crop injury were determined at the end of the test period by usual rating.

The percent control of the weeds is based on the total injury to the plants due to all factors of injury. The rating system is from 0 to 100 percent, where the value represents percent control. For example, 0 represents no herbicidal effect with growth equal to untreated controls and 100 represents complete control. The results are reported in Table I.

KEY TO TABLE I

| | | | | | |
|---|---|---|---|---|---|
| BK | = | blackgrass | SB | = | sugarbeets |
| AB | = | annual bluegrass | SF | = | sunflower |
| PR | = | perennial ryegrass | OR | = | oilseed rape |
| WO | = | wild oats | WB | = | winter barley |
| AVG | = | average grasses | WW | = | winter wheat |
| BE | = | bedstraw | CL | = | common lambsquarter |
| CC | = | common chickweed | WB | = | wild buckwheat |
| CD | = | curly dock | WM | = | wild mustard |
| IS | = | ivyleaf speedwell | AVB | = | average broadleaf |

| | | |
|---|---|---|
| - | = | no plants available for testing |
| PRE | = | Pre-emergence |
| POST | = | Post-emergence |

TABLE I

COMPOUND 1: PERCENT PLANT GROWTH CONTROL

| Method of Application | Rate (lb/A) | BG | AB | PR | WO | AVG | BE | CC | CD | IS | CL | WB | WM | AVB | SB | SF | OR | WB | WW |
|---|---|---|---|---|---|---|---|---|---|---|---|---|---|---|---|---|---|---|---|
| PRE | 4 | 100 | – | 95 | 95 | 97 | – | – | – | – | 70 | 100 | 95 | 88 | 40 | – | – | 80 | 80 |
| POST | 4 | 70 | – | 75 | 95 | 80 | – | – | – | – | 100 | 100 | 100 | 100 | 100 | – | – | 50 | 20 |
| | | | | | | | | | | | | | | | | | | | |
| PRE | 1/2 | – | 80 | 75 | 75 | 77 | – | – | 20 | – | – | 0 | – | 10 | 0 | – | – | 0 | 0 |
| PRE | 1 | – | 100 | 100 | 95 | 98 | – | – | 25 | – | – | 0 | – | 13 | 0 | – | – | 0 | 35 |
| PRE | 2 | – | 100 | 100 | 100 | 100 | – | – | 30 | – | – | 0 | – | 15 | 0 | – | – | 100 | 100 |
| POST | 1/2 | 0 | 20 | 10 | 0 | 8 | – | – | 55 | – | – | 25 | 85 | 41 | 70 | – | – | 10 | 10 |
| POST | 1 | 10 | 30 | 20 | 30 | 23 | – | – | 30 | – | – | 100 | 80 | 53 | 20 | – | – | 15 | 15 |
| POST | 2 | 40 | 40 | 65 | 35 | 45 | – | – | 60 | – | – | 100 | 30 | 48 | 30 | – | – | 50 | 50 |
| | | | | | | | | | | | | | | | | | | | |
| PRE | 1/2 | 90 | 90 | 90 | 85 | 89 | – | – | – | – | – | – | – | – | – | – | – | 0 | 0 |
| PRE | 1 | 95 | 100 | 95 | 90 | 95 | – | – | – | – | – | – | – | – | – | – | – | 80 | 80 |
| PRE | 2 | 95 | 100 | 95 | 95 | 96 | – | – | – | – | – | – | – | – | – | – | – | 90 | 90 |
| | | | | | | | | | | | | | | | | | | | |
| PRE | 1/4 | 25 | 30 | 45 | 50 | 38 | 0 | – | – | 0 | 0 | – | – | 0 | 0 | 0 | 0 | 0 | 0 |
| PRE | 1/2 | 95 | 95 | 95 | 95 | 95 | 0 | – | – | 0 | 0 | – | – | 0 | 0 | 0 | 0 | 65 | 55 |
| PRE | 1 | 95 | 100 | 100 | 95 | 98 | 0 | – | – | 0 | 0 | – | – | 0 | 0 | 0 | 0 | 70 | 75 |
| PRE | 2 | 100 | 100 | 100 | 95 | 99 | 0 | – | – | 0 | 0 | – | – | 0 | 0 | 0 | 0 | 90 | 95 |
| POST | 1/4 | 0 | 0 | – | 0 | 0 | 0 | 0 | – | – | 0 | – | – | 0 | 0 | 0 | 0 | 0 | 0 |
| POST | 1/2 | 50 | 30 | – | 50 | 43 | 0 | 0 | – | – | 0 | – | – | 0 | 0 | 0 | 0 | 0 | 0 |
| POST | 1 | 75 | 55 | – | 70 | 67 | 0 | 90 | – | – | 0 | – | – | 30 | 0 | 0 | 0 | 35 | 25 |
| POST | 2 | 90 | 75 | – | 80 | 82 | 30 | 95 | – | – | 0 | – | – | 42 | 0 | 0 | 0 | 55 | 60 |
| | | | | | | | | | | | | | | | | | | | |
| PRE | 1 | 100 | 100 | 100 | 100 | 100 | 0 | – | – | – | 0 | – | – | 0 | 0 | – | – | 50 | 70 |
| PRE | 2 | 100 | 100 | 100 | 100 | 100 | 0 | – | – | – | 0 | – | – | 0 | 20 | – | – | 95 | 95 |
| PRE | 4 | 100 | 100 | 100 | 100 | 100 | 0 | – | – | – | 0 | – | – | 0 | 30 | – | – | 95 | 95 |
| POST | 1 | 80 | 65 | 60 | 50 | 64 | 0 | – | – | – | 0 | – | – | 0 | 0 | – | – | 30 | 50 |
| POST | 2 | 90 | 75 | 70 | 75 | 78 | 0 | – | – | – | 0 | – | – | 0 | 0 | – | – | 40 | 60 |
| POST | 4 | 95 | 90 | 90 | 100 | 94 | 0 | – | – | – | 0 | – | – | 0 | 0 | – | – | 75 | 80 |

The compound of the present invention is useful as an herbicide, as both a pre-emergence and post-emergence herbicide, and can be applied in a variety of ways at various concentrations. The compound is applied to the soil where control of undesirable vegetation is desired. Preferably, the pre-emergence application is made a day or two before planting of the crop, on the date of planting or a day or two after planting of the crop. Post-emergent application is preferably made after the crop to be protected reaches a one or two leaf stage of emergence.

In the preferred practice, the compound herein defined is formulated into herbicidal compositions, by admixture, in herbicidally effective amounts, with the adjuvants and carriers normally employed for facilitating the dispersion of active ingredients for agricultural applications, recognizing the fact that the formulation and mode of application of a toxicant may affect the activity of the material in a given application. Thus, the active herbicidal compound may be formulated as granules of relatively large particle size, as wettable powders, as emulsifiable concentrates, as powdery dusts, as solutions or as any of several other known types of formulations, depending upon the desired mode of application.

Preferred formulations for pre-emergence herbicidal applications are wettable powders, emulsifiable concentrates and granules. These formulations may contain as little as about 0.5% to as much as about 95% or more by weight of active ingredient.

Crop injury and herbicidal effectiveness depends upon several factors, including the nature of the soil where control is desired and the types of seeds or plants to be controlled. Therefore, the rate of which dispersion readily in water or other dispersants. The wettable powder is ultimately applied to the soil either as a dry dust or as a dispersion in water or other liquid. Typical carriers for wettable powders include fuller's earth, kaolin clays, silicas and other readily wet organic or inorganic diluents. Wettable powders normally are prepared to contain about 5% to about 95% of the active ingredient and usually also contain a small amount of wetting, dispersing, or emulsifying agent to facilitate wetting and dispersion.

BAD ORIGINAL

Emulsifiable concentrates are homogeneous liquid compositions which are dispersible in water or other dispersant, and may consist entirely of the active compound with a liquid or solid emulsifying agent, or may also contain a liquid carrier, such as xylene, heavy aromatic naphthal, isophorone and other non-volatile organic solvents. For herbicidal application, these concentrates are dispersed in water or other liquid carrier and normally applied as a spray to the area to be treated. The percentage by weight of the essential active ingredient may vary according to the manner in which the composition is to be applied, but in general comprises about 0.5% to 95% of active ingredient by weight of the herbicidal composition.

Granular formulations wherein the toxicant is carried on relatively coarse particles, are usually applied without dilution to the area in which suppression of vegetation is desired. Typical carriers for granular formulations include sand, fuller's earth, bentonite clays, vermiculite, perlite and other organic or inorganic materials which absorb or which may be coated with the toxicant. Granular formulations normally are prepared to contain about 5% to about 25% of active ingredients which may include surface-active agents such as heavy aromatic naphthas, kerosene or other petroleum fractions, or vegetable oils; and/or stickers such as destrins, glue or synthetic resins.

Typical wetting, dispersing or emulsifying agents used in agricultural formulations include, for example, the alkyl and alkylaryl sulfonates and sulfates and their sodium salts; polyhydric alcohols; and other types of surface-active agents, many of which are available in commerce. The surface-active agent, when used, normally comprises from 0.1% to 15% by weight of the herbicidal composition.

Dusts, which are free-flowing admixtures of the active ingredients with finely divided solids such as talc, clays, flours and other organic and inorganic solids which act as dispersants and carriers for the toxicant, are useful formulations for soil-incorporating application.

Pastes, which are homogeneous suspensions of a finely divided solid toxicant in a liquid carrier such as water or oil, are employed for

specific purposes. These formulations normally contain about 5% to about 95% of active ingredient by weight, and may also contain small amounts of a wetting, dispersing or emulsifying agent to facilitate dispersion. For application, the pastes are normally diluted and applied as a spray to the area to be affected.

Other useful formulations for herbicidal applications include simple solutions of the active ingredient in a dispersant in which it is completely soluble at the desired concentration, such as acetone, alkylated naphthalenes, xylene and other organic solvents. Pressurized sprays, typically aerosols, wherein the active ingredient is dispersed in finely divided form as a result of vaporization of a low boiling dispersant solvent carrier, such as the Freons, may also be used.

The phytotoxic compositions of this invention are applied to the plants in the conventional manner. Thus, the dust and liquid compositions can be applied to the plant by the use of power-dusters, boom, rope-wick applications and hand sprayers and spray dusters. The compositions can also be applied from airplanes as a dust or a spray because they are effective in very low dosages. In order to modify or control growth of germinating seeds or emerging seedlings, as a typical example, the dust and liquid compositions are applied to the soil according to conventional methods and are distributed in the soil to a depth of at least 1/2 inch below the soil surface. It is not necessary that the phytotoxic compositions be admixed with the soil particles since these compositions can also be applied merely by spraying or sprinkling the surface of the soil. The phytotoxic compositions of this invention can also be applied by addition to irrigation water supplied to the field to be treated. This method of application permits the penetration of the compositions into the soil as the water is absorbed therein. Dust compositions, granular compositions or liquid formulations applied to the surface of the soil can be distributed below the surface of the soil by conventional means such as discing, dragging or mixing operations.

The herbicide can also be applied in the crop furrow or it can be applied by injection along-side the crop and furrow in rows spaced several inches from the seed.

WHAT IS CLAIMED IS:

1. A method of selectively controlling undesirable vegetation in broadleaf crops comprising applying an herbicidally effective amount of 1-(phenylcarbamoyloxy)-2-butyne.

2. A herbicidal composition comprising a herbicidally effective amount of 1-(phenylcarbamoyloxy)-2-butyne and an inert carrier.

8422

0109723

European Patent Office

# EUROPEAN SEARCH REPORT

Application number

EP 83 20 1651

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| D,X | US-A-3 660 465 (D.R. BAKER) * Column 2, lines 16-72, Table 1, compound 9; column 5, line 1 - column 6, line 29 * | 2 | A 01 N 47/20 |
| D,A | | 1 | |
| | --- | | |
| X | CH-A- 359 318 (PITTSBURGH PLATE GLASS COMPANY) * Whole document * | 1,2 | |
| | --- | | |
| X | DE-B-1 034 912 (B.A.S.F.) * Column 2, lines 32-47; example 3; claim 1 * | 1,2 | |
| | --- | | TECHNICAL FIELDS SEARCHED (Int. Cl. 3) |
| A | CHEMICAL ABSTRACTS, vol. 71, no. 7, August 18, 1969, page 200, no. 29515y, Columbus, Ohio, US T. TAKEMATSU et al.: "Relation of chemical structure to herbicidal activity and properties of carbamates" & UTSUNOMIYA DIAIGAKU GAKUGEI GAKUBU KENKYU RONSHU, DIA 2-BU 1968, 7(2), 177-86 * Whole abstract * | 1,2 | A 01 N |
| | --- | | |
| A | US-A-3 123 463 (T.R. HOPKINS et al.) * Column 1, lines 16-36; example 2; claims * | 1,2 | |
| | --- -/- | | |

The present search report has been drawn up for all claims

| Place of search | Date of completion of the search | Examiner |
|---|---|---|
| THE HAGUE | 23-02-1984 | FLETCHER A.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

0109723

European Patent Office

# EUROPEAN SEARCH REPORT

Application number

EP 83 20 1651

Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | US-A-2 788 268 (J.A. TURISCH) * Column 1, line 24 - column 2, line 57 * ----- | 1,2 | |
| | | | TECHNICAL FIELDS SEARCHED (Int. Cl. 3) |
| | | | |

The present search report has been drawn up for all claims

| Place of search | Date of completion of the search | Examiner |
|---|---|---|
| THE HAGUE | 23-02-1984 | FLETCHER A.S. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document